# EUROPEAN PATENT APPLICATION

(11) **EP 2 669 193 A2**
(43) Date of publication of application: **04.12.2013**
(21) Application number: 13169017.4
(22) Date of filing: 23.05.2013
(51) Int. Cl.: B64C 25/12, B64C 25/20

(54) **Landing gear for an aircraft**

(30) Priority: 28.05.2012 GB 201209419
(71) Applicant: AIRBUS OPERATIONS LIMITED, Filton Bristol Bristol BS99 7AR (GB)
(72) Inventor: Chow, Leung Choi, Bristol, Bristol BS99 7AR (GB); Wood, Christopher Neil, BRISTOL, Bristol BS99 7AR (GB); Campbell, Phillip Ian, BRISTOL, Bristol BS99 7AR (GB)
(74) Representative: Gregory, John David Charles

(57) **Abstract**

The invention provides a landing gear 120 for an aircraft 110, the landing gear comprising a main strut 121 having a first upper end arranged to be moveably mounted to a structure of the aircraft, a landing gear wheel assembly 131, 132 connected to a second lower end of the main strut, the landing gear wheel assembly comprising at least one landing gear wheel arranged to roll in a fore-aft direction with respect to the main strut, and a stay 122 having a first upper end arranged to be connected to a structure of the aircraft, and a second lower end pivotally mounted to a mounting element 140 on the main strut, wherein the mounting element on the main strut is positioned substantially in line with the main strut in the fore-aft direction. The invention also provides a main strut, an aircraft and a kit of parts.

## Description

### Background of the Invention

The present invention concerns landing gear for an aircraft.

More particularly, but not exclusively, this invention concerns landing gear comprising a main strut having a first upper end arranged to be moveably mounted to a structure of the aircraft, a landing gear wheel assembly connected to a second lower end of the main strut, the landing gear wheel assembly comprising at least one landing gear wheel arranged to roll in a fore-aft direction with respect to the main strut, and a stay having a first upper end arranged to be connected to a structure of the aircraft, and a second lower end pivotally mounted to a mounting element on the main strut.

The invention also concerns a main strut for an aircraft landing gear, an aircraft and a kit of parts.

It is known that landing gear on aircraft produce noise when deployed, and the aircraft manufacturing industry tries to reduce this noise as much as possible, especially during approach and landing of the aircraft. A typical prior art main, wing landing gear comprises a main strut and a side stay attached to the side of the main strut in order to aid in the deployment of the landing gear and its retraction into a landing gear bay on the aircraft.

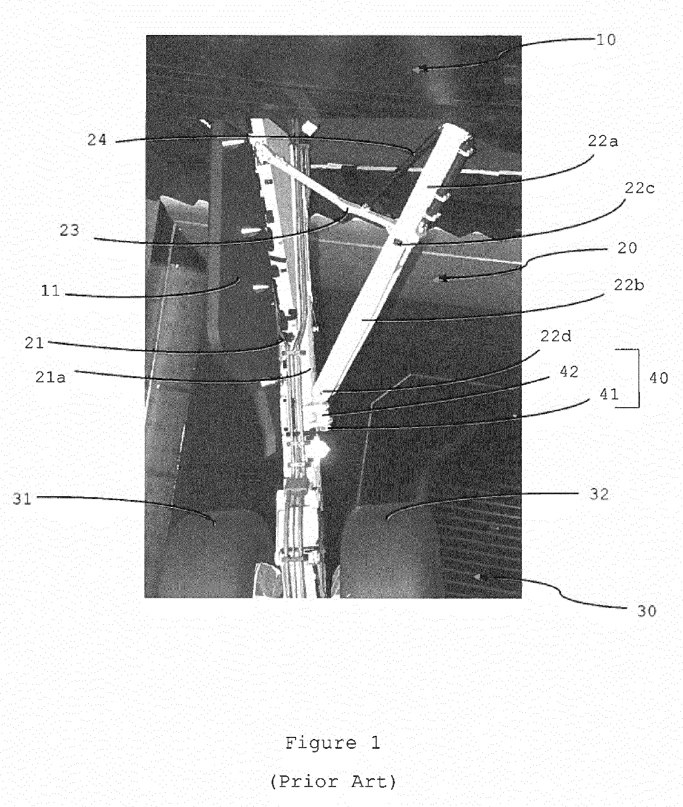

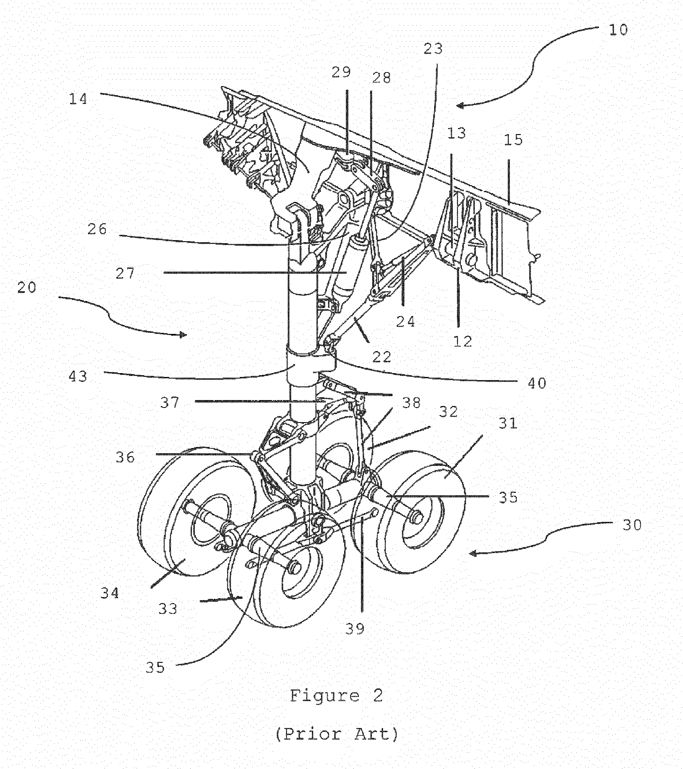

Two typical prior art wing landing gears 20 are shown in Figures 1 and 2.

Looking at Figure 1, the landing gear 20 extends below a wing of an aircraft 10. An aircraft landing gear bay door 11 can be seen in its open position to allow the landing gear 20 to be deployed. The landing gear 20 comprises a main strut 21 extending substantially vertically below the aircraft wing. The upper end of the main strut 21 is attached inside the aircraft landing gear bay in the aircraft wing.

At the lower end of the main strut 21 is a landing gear wheel assembly 30 with two landing gear wheels 31, 32. The wheels 31, 32 are mounted to the main strut 21 via a wheel axle (not shown) so that they can roll in a fore-aft direction (i.e. towards and away from the position where the figure is taken). This allows the aircraft to move in a fore or aft direction (i.e. forwards or backwards).

An upper end of a side stay 22 is attached inside the aircraft landing gear bay in the aircraft wing at a position to the side of the main strut 21. The side stay extends down below the aircraft and towards the main strut 21 and a lower end of a side stay 22 is attached to the main strut 21 in a middle region of the main strut. The side stay 22 comprises an upper section 22a and a lower section 22b. The upper 22a and lower 22b sections of the side stay are pivotally connected by a hinge 22c.

At the lower end of the side stay 22, a cardan pin 41 is pivotally connected to a second hinge 22d. The cardan pin 41 is part of a cardan pin joint 40, also comprising a cardan pin frame 42. The cardan pin frame 42 contains the cardan pin 41 and allows it to rotate within the frame 42. There are also bearings (not shown) in between the cardan pin 41 and the cardan pin frame 42 to aid rotation. The cardan pin frame 42 forms part of the main strut 21 and is positioned on a side surface 21a of the main strut 21.

On the upper section 22a of the side stay 22, just above the hinge 22c, a first end of a lock stay 23 is pivotally connected to the side stay 22. A second end of the lock stay extends towards the main strut 21 and is pivotally connected to the main strut 21 towards its upper end.

A first end of a downlock actuator 24 is pivotally connected towards the upper end of the side stay 22. A second end of the downlock actuator 24 is pivotally connected towards the first end of the lock stay 23.

The pivotal connections of the cardan pin joint 40, downlock actuator 24, lock stay 23, two sections of the side stay 22 and the main strut 21 allow the landing gear 20 to be deployed and retracted from the landing gear bay of the aircraft 10.

Looking at Figure 2, the landing gear 20 is similar to that shown in Figure 1, with more detail shown. This additional detail will now be described. Any reference numerals used for Figure 2 that are also used for Figure 1 refer to similar elements.

In Figure 2, the landing gear 20 is shown attached to a wing rear spar 15 of the wing of the aircraft 10. The upper end of the main strut 21 is attached to a rib 14 that is attached to the spar 15.

The landing gear wheel assembly 30 has four landing gear wheels 31, 32, 33, 34. Front wheels 31, 32 are mounted on a first wheel axle 35 and rear wheels 33, 34 are mounted on a second wheel axle 35. The two wheel axles 35 are connected to each other and also to the lower end of the main strut 21. All four wheels 31, 32, 33, 34 can roll in a fore-aft direction.

The landing gear wheel assembly 30 also comprises a bogie alignment pitch trimmer 37 and associated articulated links 38, a brake rod 39 and torque links 36.

An upper end of the side stay 22 is attached to the wing rear spar 15 by a side stay attachment 12, including a side stay attachment pivotable pin 13.

The lower end of the side stay 22 is connected to the main strut 21 by a cardan pin joint 40 mounted on a mounting element sleeve 43, which is an integral part of the main strut 21. The cardan pin joint 40 is mounted on a side surface of the main strut 21.

A drag arm 26 extends out from the fore side of the main strut 21. The lower end of the drag arm 26 is fixedly attached to the main strut 21 approximately halfway along the length of the main strut 21. The upper end of the drag arm 26 is pivotally attached to the wing rear spar 15. The drag arm 26 forms a third leg of an upside down tripod, also comprising the main strut 21 and the side stay 22. The drag arm 26 and main strut 21 (collectively known as the main fitting) are aligned in the fore-aft direction.

A retraction actuator 27 is also connected to the fore side of the main strut 21 with its lower end attached to the main strut 21 a short distance above the lower end of the drag arm 26. The upper end of the retraction actuator 27 is connected to a retraction link 29 via a retraction lever 28. The retraction link is attached to the wing rear spar 15.

On the upper section 22a of the side stay 22, just above the hinge 22c, a first end of a lock stay 23 is pivotally connected to the side stay 22. A second end of the lock stay extends towards the drag arm 26 and is pivotally connected to the drag arm 26 towards its upper end, near its connection to the wing rear spar 15.

Either of the landing gear may also include passive noise reduction devices (not shown), such as solid or porous fairings over some of the components of the landing gear.

The present invention seeks to provide an improved landing gear, with improved noise reduction.

### Summary of the Invention

The present invention provides, according to a first aspect, a landing gear for an aircraft, the landing gear comprising a main strut having a first upper end arranged to be moveably mounted to a structure of the aircraft, a landing gear wheel assembly being connected to a second lower end of the main strut, the landing gear wheel assembly comprising at least one landing gear wheel arranged to roll in a fore-aft direction with respect to the main strut, and a stay having a first upper end arranged to be connected to a structure of the aircraft, and a second lower end pivotally mounted to a mounting element on the main strut, wherein the mounting element on the main strut is positioned substantially in line with the main strut in the fore-aft direction.

The inventors have found that having the mounting element substantially in line with the main strut in the fore-aft direction reduces the noise produced.

One reason for this is that the noise produced when air flows past a landing gear is proportional to the velocity of the airflow to the power of six. It has been found that the local air speed in line with the main strut in the fore-aft direction is lower than the air speed at the side of the main strut.

As the stay extends from the aircraft to the front or aft of the main strut, the side stay is longer that it would have been if it was mounted to the side of the main strut.

In addition, with the stay mounted at the fore or aft of the main strut, the mounting experiences a greater force and so the pivotal mounting to the main strut must be designed to take a larger force. This results in an increased size and weight of the pivotal mounting and possibly the side stay. Also, the kinematic design of the landing gear has to be changed.

It has been found that, despite these extra considerations, noise can still be reduced by the new arrangement.

Here, main strut refers to the strut of the landing gear that extends down substantially vertically from the aircraft when deployed. The main strut takes the majority of the load on the landing gear through mainly axial loading and therefore has a large axial strength.

Here, stay refers to an element used to support the main strut and provide strength to the landing gear in a direction that is not aligned with the axis of the main strut.

Here, the landing gear wheel may be pivotally mounted to allow the aircraft to be steered on the ground. However, the neutral or central position of the wheel in its pivotal mounting will be such that the wheel rolls in the fore-aft direction.

Preferably, the stay extends laterally away from the main strut with a substantial sideways component perpendicular to the fore-aft direction. Here, the stay provides strength to the landing gear in a sideways direction.

Preferably, the landing gear is arranged such that when it is retracted, the main strut extends sideways, with a substantial component perpendicular to the fore-aft direction from its mounting to the aircraft structure. More preferably, the main strut extends to the same side as the sideways component of the stay.

The stay may also extend away from the main strut with a fore-aft component. Here, the stay provides strength to the landing gear in the fore-aft direction. Preferably, the stay extends away from the main strut in the fore direction.

The landing gear may also comprise a drag arm to form a third leg of an upside down tripod, also comprising the main strut and the stay. The drag arm and main strut are preferably aligned in the fore-aft direction.

Preferably, the mounting element on the main strut is on the fore side of the main strut. More preferably, the mounting element is near a flow stagnation point (or line) on the fore side of the main strut. It is less complicated to have the mounting element at the fore side of the main strut as there are not so many other components present, compared to the aft side.

Preferably, the stay is pivotally mounted to the main strut by a cardan pin joint, the cardan pin joint comprising a cardan pin frame and a cardan pin rotatably mounted inside the frame.

Here, cardan pin joint refers to a joint that allows pivotal movement in order to allow a landing gear to be retracted and deployed. The cardan pin joint must be able to take very strong loads experienced during landing and ground manoeuvres of an aircraft.

More preferably, the cardan pin is attached to the second lower end of the stay and the cardan pin frame is the mounting element on the main strut or is attached to the mounting element on the main strut.

Preferably, the stay is pivotally mounted to the cardan pin joint.

Even more preferably, the cardan pin frame is attached to the main strut such that its longitudinal axis is orientated away from the longitudinal axis of the main strut such that the upper end of the cardan pin frame is at a different lateral position with respect to the main strut than the lower end. Even more preferably, the orientation of the cardan pin frame with respect to the longitudinal axis of the main strut is in the opposite direction to the orientation of the stay with respect to the longitudinal axis of the main strut.

Preferably, the landing gear is a main landing gear, preferably for mounting to a wing of an aircraft.

According to a second aspect of the invention there is also provided a main strut for an aircraft landing gear, the main strut comprising a landing gear wheel connector for connecting a landing gear wheel assembly such that a wheel of the assembly is arranged to roll in a fore-aft direction with respect to the main strut, and a mounting element for pivotally mounting a stay to the main strut, wherein the mounting element on the main strut is positioned substantially in line with the main strut in the fore-aft direction.

According to a third aspect of the invention there is also provided an aircraft comprising the landing gear or main strut of any preceding claim, wherein the main strut is attached at its first upper end to a structure of the aircraft such that the fore side of the main strut faces towards the front of the aircraft and the aft side of the main strut faces the rear of the aircraft.

The present invention is of greater application to larger aircraft although the present invention may also be applied to smaller aircraft. The aircraft is preferably heavier than 10 tonnes dry weight, more preferably heavier than 50 tonnes dry weight, and even more preferably heavier than 200 tonnes dry weight. The aircraft is preferably of a size equivalent to an aircraft designed to carry more than 40 passengers, and more preferably more than 100 passengers.

According to a fourth aspect of the invention there is also provided a kit of parts for an aircraft landing gear comprising a main strut, a landing gear wheel assembly for connecting to an end of the main strut such that a wheel of the assembly is arranged to roll in a fore-aft direction with respect to the main strut, and a stay for pivotally mounting to a mounting element on the main strut positioned substantially in line with the main strut in the fore-aft direction.

It will of course be appreciated that features described in relation to one aspect of the present invention may be incorporated into other aspects of the present invention. For example, the main strut, aircraft and kit of parts of the invention may incorporate any of the features described with reference to the landing gear of the invention and vice versa.

### Description of the Drawings

Embodiments of the present invention will now be described by way of example only with reference to the accompanying schematic drawings of which:
- Figure 1: shows a front view of a landing gear according to the prior art;
- Figure 2: shows a perspective view of a landing gear according to the prior art, similar to that shown in Figure 1;
- Figure 3: shows a front view of a landing gear according to a first embodiment of the invention;
- Figure 4a: shows a front view of a landing gear according to a second embodiment of the invention; and
- Figure 4b: shows a rear view of the landing gear of Figure 4a; and
- Figure 5: shows a rear view of a landing gear according to a third embodiment of the invention.

### Detailed Description

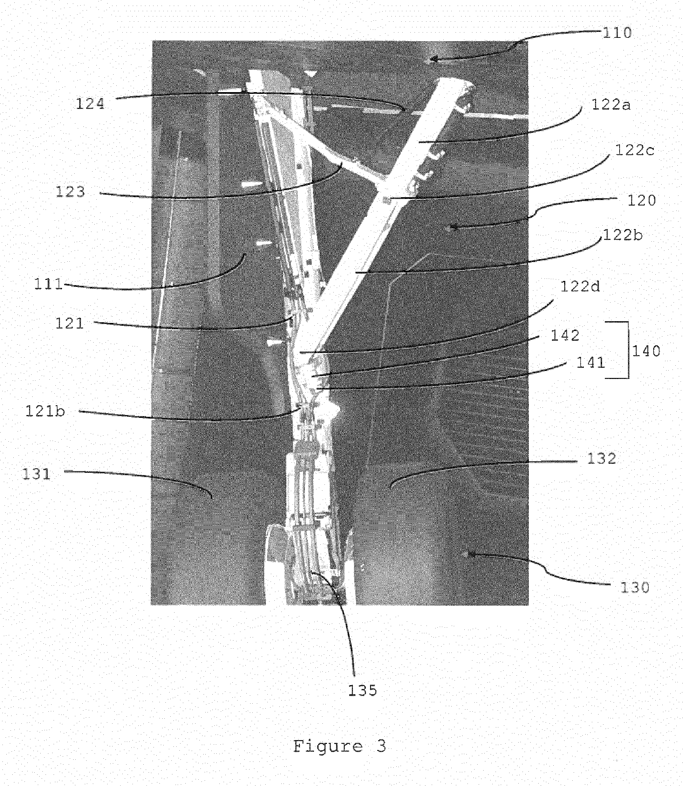

Figure 3 shows a front view of a wing landing gear 120 according to a first embodiment of the invention. The landing gear 120 is similar to that shown in Figures 1 and 2, except where differences are described below.

The landing gear 120 extends below a wing of an aircraft 110. An aircraft landing gear bay door 111 can be seen in its open position to allow the landing gear 120 to be deployed. The landing gear 120 comprises a main strut 121 extending substantially vertically below the aircraft wing. The upper end of the main strut 121 is attached inside the aircraft landing gear bay in the aircraft wing.

At the lower end of the main strut 121 is a landing gear assembly 130 with two landing gear wheels 131, 132 on a wheel axle 135. The wheels 131, 132 are mounted to the main strut 121 so that they can roll in a fore-aft direction (i.e. towards and away from the position where the figure is taken). This allows the aircraft to move in a fore or aft direction (i.e. forwards or backwards).

An upper end of a side stay 122 is attached inside the aircraft landing gear bay in the aircraft wing at a position to the side of the main strut 121. The side stay extends down below the aircraft and towards the main strut 121 and a lower end of a side stay 122 is attached to the main strut 121 in a middle region of the main strut. The side stay 122 comprises an upper section 122a and a lower section 122b. The upper 122a and lower 122b sections of the side stay are pivotally connected by a hinge 122c.

At the lower end of the side stay 122, a cardan pin 141 is pivotally connected to a second hinge 122d. The cardan pin 141 is part of a cardan pin joint 140, also comprising a cardan pin frame 142. The cardan pin frame 142 contains the cardan pin 141 and allows it to rotate within the cardan pin frame 142. There are also bearings (not shown) in between the cardan pin 141 and the cardan pin frame 142 to aid rotation.

The cardan pin frame 142 is mounted on a fore surface 121b of the main strut 21. This is different to the landing gear 20 of Figure 1, where the cardan pin frame 42 is mounted to the side 21a of the main strut 21. The cardan pin frame 142 of Figure 3 is mounted on the surface of the main strut that faces the direction of travel of the aircraft 110 during flight.

The axis of the cardan pin frame 142 is angled on the main strut 121 such that it is angled away from the side stay 122.

A drag arm (not shown) extends out from the fore side of the main strut 121. The lower end of the drag arm is fixedly attached to the main strut 121 approximately halfway along the length of the main strut 121. The upper end of the drag arm is pivotally attached to the aircraft wing. The drag arm forms a third leg of an upside down tripod, also comprising the main strut 121 and the side stay 122. The drag arm and main strut 121 (collectively known as the main fitting) are aligned in the fore-aft direction.

On the upper section 122a of the side stay 122, just above the hinge 122c, a first end of a lock stay 123 is pivotally connected to the side stay 122. A second end of the lock stay extends towards the main strut 121 and is pivotally connected to the main strut 121 towards its upper end.

A first end of a downlock actuator 124 is pivotally connected towards the upper end of the side stay 122. A second end of the downlock actuator 124 is pivotally connected towards the first end of the lock stay 123.

The pivotal connections of the cardan pin joint 140, downlock actuator 124, lock stay 123, two sections of the side stay 122, drag arm and the main strut 121 allow the landing gear 120 to be deployed and retracted from the landing gear bay of the aircraft 110.

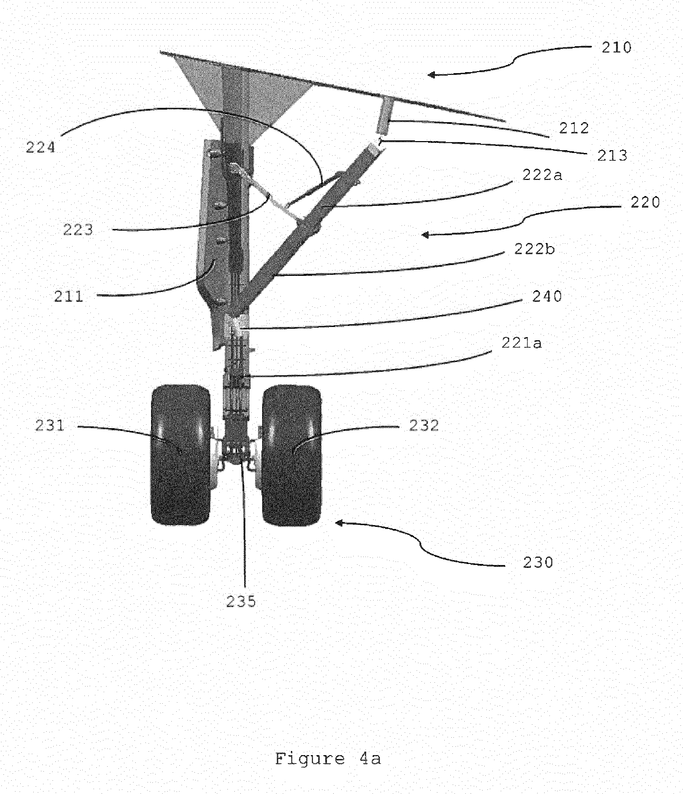

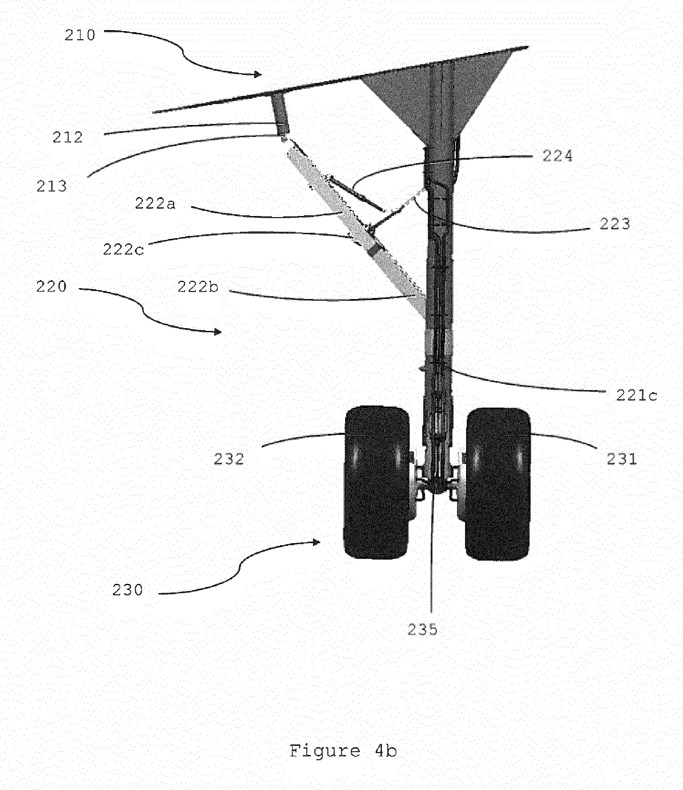

Figures 4a and 4b shows front and rear views of a wing landing gear 220 according to a second embodiment of the invention. The landing gear 220 extends below a wing of an aircraft 210. An aircraft landing gear bay door 211 can be seen in its open position to allow the landing gear 220 to be deployed.

The landing gear 220 comprises a main strut 221 extending substantially vertically below the aircraft wing. The upper end of the main strut 221 is attached inside the aircraft landing gear bay in the aircraft wing. At the lower end of the main strut 221 is a landing gear wheel assembly 230 with two landing gear wheels 231, 232 on a wheel axle 235. The wheels 231, 232 are mounted to the main strut 221 so that they can roll in a fore-aft direction (i.e. towards and away from the position where the figures are taken). This allows the aircraft to move in a fore or aft direction (i.e. forwards or backwards).

An upper end of a side stay 222 is pivotally attached, at pivotal joint 213 to a downwardly extending strut 212, which is attached inside the landing gear bay of the aircraft 210 at a position to the side of the main strut 221. The side stay 222 extends down below the aircraft 210 and towards the main strut 221 and a lower end of a side stay 222 is attached to the main strut 221 in a middle region of the main strut. The side stay 222 comprises an upper section 222a and a lower section 222b. The upper 222a and lower 222b sections of the side stay are pivotally connected by a hinge 222c.

At the lower end of the side stay 222, a cardan pin 241 is pivotally connected to a second hinge (not shown). The cardan pin 241 is part of a cardan pin joint 240, also comprising a cardan pin frame 242. The cardan pin frame 242 contains the cardan pin 241 and allows it to rotate within the cardan pin frame 242. The cardan pin frame 242 is mounted on a fore surface 221b of the main strut 221. The cardan pin frame 242 of Figure 4a is mounted on the surface of the main strut that faces the direction of travel of the aircraft 210 during flight.

The axis of the cardan pin frame 242 is angled on the main strut 221 such that it is angled away from the side stay 222.

A drag arm (not shown) extends out from the fore side of the main strut 221. The lower end of the drag arm is fixedly attached to the main strut 221 approximately halfway along the length of the main strut 221. The upper end of the drag arm is pivotally attached to the aircraft wing. The drag arm forms a third leg of an upside down tripod, also comprising the main strut 221 and the side stay 222. The drag arm and main strut 221 (collectively known as the main fitting) are aligned in the fore-aft direction.

On the upper section 222a of the side stay 222, just above the hinge (not shown), a first end of a lock stay 223 is pivotally connected to the side stay 222. A second end of the lock stay extends towards the main strut 221 and is pivotally connected to the main strut 221 towards its upper end.

A first end of a downlock actuator 224 is pivotally connected towards the upper end of the side stay 222. A second end of the downlock actuator 224 is pivotally connected towards the first end of the lock stay 223.

The pivotal connections of the cardan pin joint 240, downlock actuator 224, lock stay 223, two sections of the side stay 222, the pivotal joint 213, the drag arm and the main strut 221 allow the landing gear 220 to be deployed and retracted from the landing gear bay of the aircraft 210.

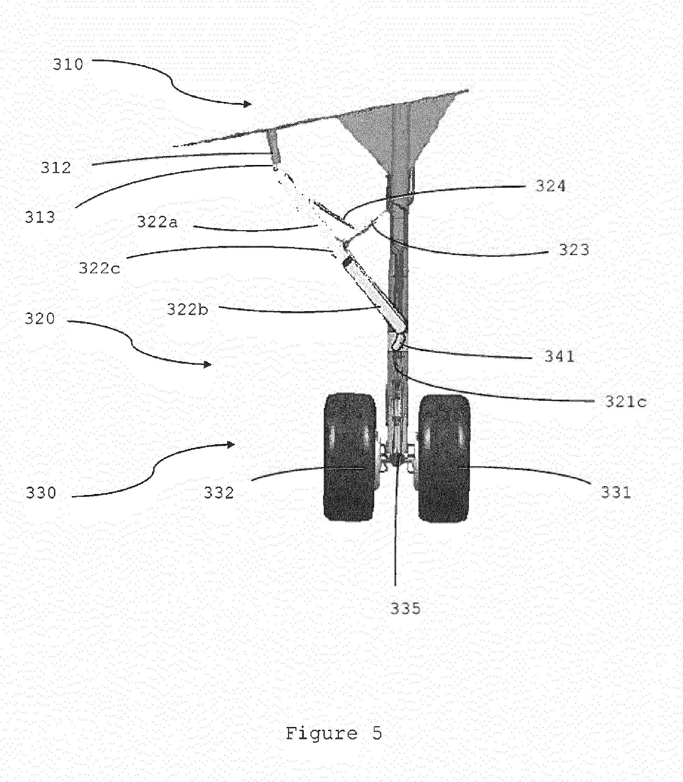

Figure 5 shows a rear views of a wing landing gear 320 according to a third embodiment of the invention. The landing gear 320 extends below a wing of an aircraft 310.

The landing gear 320 comprises a main strut 321 extending substantially vertically below the aircraft wing. The upper end of the main strut 321 is attached inside the aircraft landing gear bay in the aircraft wing. At the lower end of the main strut 321 is a landing gear wheel assembly 330 with two landing gear wheels 331, 332 on a wheel axle 335. The wheels 331, 332 are mounted to the main strut 321 so that they can roll in a fore-aft direction (i.e. towards and away from the position where the figures are taken). This allows the aircraft to move in a fore or aft direction (i.e. forwards or backwards).

An upper end of a side stay 322 is pivotally attached, at pivotal joint 313 to a downwardly extending strut 312, which is attached inside the landing gear bay of the aircraft 310 at a position to the side of the main strut 321. The side stay 322 extends down below the aircraft 310 and towards the main strut 321 and a lower end of a side stay 322 is attached to the main strut 321 in a middle region of the main strut. The side stay 322 comprises an upper section 322a and a lower section 322b. The upper 322a and lower 322b sections of the side stay are pivotally connected by a hinge 322c.

At the lower end of the side stay 322, a cardan pin 341 is pivotally connected to a second hinge (not shown). The cardan pin 341 is part of a cardan pin joint (not labelled), also comprising a cardan pin frame (not labelled). The cardan pin frame contains the cardan pin 341 and allows it to rotate within the cardan pin frame. The cardan pin frame is mounted on an aft surface 321c of the main strut 321. The cardan pin frame of Figure 5 is mounted on the surface of the main strut that faces away from the direction of travel of the aircraft 310 during flight.

This is different to the cardan pin frame of Figures 4a and 4b where the cardan pin frame is mounted on the surface of the main strut that faces the direction of travel of the aircraft 210 during flight. As a result, the kinematic design of the landing gear is also different as a result.

The axis of the cardan pin frame is angled on the main strut 321 such that it is angled away from the side stay 322.

A drag arm (not shown) extends out from the fore side of the main strut 321. The lower end of the drag arm is fixedly attached to the main strut 321 approximately halfway along the length of the main strut 321. The upper end of the drag arm is pivotally attached to the aircraft wing. The drag arm forms a third leg of an upside down tripod, also comprising the main strut 321 and the side stay 322. The drag arm and main strut 321 (collectively known as the main fitting) are aligned in the fore-aft direction.

On the upper section 322a of the side stay 322, just above the hinge (not shown), a first end of a lock stay 323 is pivotally connected to the side stay 322. A second end of the lock stay extends towards the main strut 321 and is pivotally connected to the main strut 321 towards its upper end.

A first end of a downlock actuator 324 is pivotally connected towards the upper end of the side stay 322. A second end of the downlock actuator 324 is pivotally connected towards the first end of the lock stay 323.

The pivotal connections of the cardan pin joint, downlock actuator 324, lock stay 323, two sections of the side stay 322, the pivotal joint 313, the drag arm and the main strut 321 allow the landing gear 220 to be deployed and retracted from the landing gear bay of the aircraft 310.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The landing gear may also include passive noise reduction devices (not shown), such as solid or porous fairings over some of the components of the landing gear. In particular, the side stay may be provided with a mesh fairing. The landing gear may have a cylindrical shape side stay component.

The landing gear may have any suitable number of wheels; for example, 2, 4 or 6 wheels.

The arrangement of the various parts of the landing gear can vary. For example, whether or not the stay is pivotally mounted to the main strut in a middle region of the main strut, or the arrangement of the torque link, pitch trimmer, articulation link etc., depend on the landing gear design chosen. Also, the length of the landing gear on touchdown will be compressed, compared to its fully stretched length on approach to landing. Of course, the landing gear design will be different for different aircraft.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A landing gear for an aircraft, the landing gear comprising:
- a main strut having a first upper end arranged to be moveably mounted to a structure of the aircraft,
- a landing gear wheel assembly being connected to a second lower end of the main strut, the landing gear wheel assembly comprising at least one landing gear wheel arranged to roll in a fore-aft direction with respect to the main strut, and
- a stay having a first upper end arranged to be connected to a structure of the aircraft, and a second lower end pivotally mounted to a mounting element on the main strut,
wherein the mounting element on the main strut is positioned substantially in line with the main strut in the fore-aft direction.

2. A landing gear as claimed in claim 1, wherein the stay extends laterally away from the main strut with a substantial sideways component perpendicular to the fore-aft direction.

3. A landing gear as claimed in claim 1 or claim 2, wherein the mounting element on the main strut is on the fore side of the main strut.

4. A landing gear as claimed in any preceding claim, wherein the stay is pivotally mounted to the main strut by a cardan pin joint, the cardan pin joint comprising a cardan pin frame and a cardan pin rotatably mounted inside the frame.

5. A landing gear as claimed in claim 4, wherein the cardan pin is attached to the second lower end of the stay and the cardan pin frame is the mounting element on the main strut or is attached to the mounting element on the main strut.

6. A landing gear as claimed in any claim 5, wherein the cardan pin frame is attached to the main strut such that its longitudinal axis is orientated away from the longitudinal axis of the main strut such that the upper end of the cardan pin frame is at a different lateral position with respect to the main strut than the lower end.

7. A landing gear as claimed in any preceding claim, wherein the landing gear is a main landing gear.

8. A main strut for an aircraft landing gear, the main strut comprising:
- a landing gear wheel connector for connecting a landing gear wheel assembly such that a wheel of the assembly is arranged to roll in a fore-aft direction with respect to the main strut, and
- a mounting element for pivotally mounting a stay to the main strut,
wherein the mounting element on the main strut is positioned substantially in line with the main strut in the fore-aft direction.

9. An aircraft comprising a landing gear or main strut of any preceding claim, wherein the main strut is attached at its first upper end to a structure of the aircraft such that the fore side of the main strut faces towards the front of the aircraft and the aft side of the main strut faces the rear of the aircraft.

10. A kit of parts for an aircraft landing gear comprising:
- a main strut,
- a landing gear wheel assembly for connecting to an end of the main strut such that a wheel of the assembly is arranged to roll in a fore-aft direction with respect to the main strut, and
- a stay for pivotally mounting to a mounting element on the main strut positioned substantially in line with the main strut in the fore-aft direction.
